**Europäisches Patentamt**

**European Patent Office**

**Office européen des brevets**

(19)

(11) Publication number : **0 357 842 B1**

# (12) EUROPEAN PATENT SPECIFICATION

(45) Date of publication of patent specification :
**19.04.95 Bulletin 95/16**

(51) Int. Cl.⁶ : **G06T 5/20**

(21) Application number : **88201938.3**

(22) Date of filing : **07.09.88**

(54) **Digital image processing taking into account the standard deviation.**

(43) Date of publication of application :
**14.03.90 Bulletin 90/11**

(45) Publication of the grant of the patent :
**19.04.95 Bulletin 95/16**

(84) Designated Contracting States :
**BE CH DE FR GB IT LI NL**

(56) References cited :
**COMPUTER VISION, GRAPHICS AND IMAGE PROCESSING, vol. 25, no. 2, February 1984, pages 236-251, Academic Press, Inc., New York, US; I. SCOLLAR et al.: "Image enhancement using the median and the interquartile distance"**
**Image and Vision Computing, vol.1, nr.2, pp 67-78, May 1983, Winchester, UK; M.L.Cocklin et al.:"Digital Processing of Chest Radiographs"**

(73) Proprietor : **AGFA-GEVAERT naamloze vennootschap**
**Septestraat 27**
**B-2640 Mortsel (BE)**

(72) Inventor : **Dechamps, Jozef Arseen**
**Mechelsesteenweg 130**
**B-2510 Mortsel (BE)**

EP 0 357 842 B1

## Description

The present invention is in the field of digital image processing. The invention more particulary relates to digital image processing to be used for the purpose of image enhancement in the field of computer assisted diagnostic imaging systems.

Description of the prior art

A general problem in radiology is the discernability of small details especially if their density is quite similar to that of the surrounding area.

Image processing methods were developed by means of which the detectability of details can be enhanced and by means of which the information transfer from an image to the observer can be maximized. By means of said image processing methods e.g. edge enhancement and contrast enhancement can be obtained.

Image processing in radiology can be performed on a digital representation of a radiologic image that is obtained either through a radiologic method in which a digital image of a body is directly obtained, such as computerized tomography, or through a radiologic method in which a digital image is indirectly obtained e.g. by scanning an image stored in an intermediate storage device such as a silver halide emulsion film or a photostimulable phosphor.

In prior art image processing methods, e.g. the unsharp masking method, the resulting image after processing is function of the average pixel value. This pixel value can be a density value, an intensity value or the logarithm of an intensity value. In the following whenever a pixel density value is used this could be replaced by an intensity value or by the logarithm of an intensity value.

However, the above-mentioned average pixel value gives poor indication of the local image information. A better indicator is the standard deviation of the pixel densities which factor gives an indication of the pixel density distribution in a region surrounding the pixel of interest. By using the standard deviation, the image enhancement factor can be controlled locally so that the noise in an image can be taken into account.

Prior art image processing methods that take into account the standard deviation of the pixels as well as the average pixel value and the original pixel values are known and are e.g. described in a publication by M.I. Cocklin et al. in Image and Vision Computing, Vol. 1, Nr. 2, May 1983, p. 70 and following pages.

Although a lot of research has been performed in respect of image processing methods that take into account the standard deviation, a prejudice still exists against the use of the standard deviation because of the increase of computational effort that this usually entails. Therefore several prior art approaches use an approximation of the standard deviation of the pixel values.

Among existing image processing techniques adaptive histogram equalisation is in respect of the present invention of particular interest.

Histogram equalisation is an image processing technique by means of which overall contrast is improved by equally distributing the pixel densities in an image throughout the available grey scale.

According to this technique the histogram and a rescaled cumulative histogram of an image are calculated and each pixel of an original image is mapped to its corresponding value in said rescaled cumulative histogram.

For some pictures better results (improved contrast in smaller regions) are obtained by applying the continuous adaptive histogram equalisation technique according to which an image is scanned by means of a sliding window (a region of N times M pixels surrounding a pixel of interest and sliding over the entire image). Again the histogram and a rescaled cumulative histogram is calculated for each area covered by the sliding window. The central pixel in the window is mapped to its corresponding value in the rescaled cumulative histogram. This procedure is repeated for each pixel.

A variant is the adaptive histogram equalisation technique according to which an image is subdivided into regions or windows.

The histogram and the cumulative histogram are calculated for each window and the pixel of interest is mapped to its corresponding value in said cumulative histogram. Smooth transitions between individual zones can for example be obtained by means of interpolation techniques.

To prevent the overamplification in regions with a very narrow histogram a limit can be set on the maximum slope of the cumulative histogram for example by clipping the original histogram of the image. This method is commonly called contrast limited adaptive histogram equalisation.

An overview of the above techniques is i.e. given in the introductory part of a publication by R.H. Sherrier and G.A. Johnson in IEEE Transactions on Medical Imaging Vol. M1-6, No. 1, March 1987.

The above methods have some disadvantages: the methods are rather slow and ask for a lot of computational effort and under certain conditions the processed image shows rather undesirable effects.

An amended form of the histogram equalisation technique in which the standard deviation of the histogram distribution of a region surrounding a pixel of interest is taken into account is disclosed in a publication by Hartwig Blume and Kanji Kamiya in SPIE Vol. 767 Medical Imaging (1987) p. 375.

In the captioned disclosure is published that such procedure would greatly increase the computational effort. Hence a prejudice exists against the use of the local standard deviation in an amended form of adaptive histogram equalisation technique.

A method for exerting the above form of histogram equalisation in which the standard deviation is taken into account within a reasonable amount of computation time is not known .

Another existing image processing technique namely the unsharp masking technique is in respect of the present invention of particular interest.Commonly the result of the image processing technique can be formulated as follows: $y = x + alfa.T(x-m)$ wherein y represents a pixel value after image processing, x represents an original pixel value, alfa determines the amplification, m is an average pixel value and T is an S-like function with in the normalised form the following properties $T(0)=0$ and $T'(0)=1$ ($T'$ representing the first derivate of the function T). This function is used to prevent overamplification of large values x-m.

Commonly the amplification factor is made function of x and/or m so that an estimation is made of the pixel values in an image region surrounding a pixel of interest.

The unsharp masking formula can be reformulated more generally as follows: $y = x + alfa_1(x).alfa_2(m).T(x-m)$.

Neither the pixel value nor the average pixel value gives a satisfactory indication of the image information in a region surrounding a pixel of interest since these values depend on the irradiation dose (x-ray dose) that is used.

The standard deviation gives a better indication of the local image information. A variant of the unsharp masking method that takes into account the standard deviation can be formulated for example as follows: $y = x + alfa(s).T(x-m)$ wherein s is the standard deviation.

One disadvantage of the unsharp masking method of the state of the art is the need of a smoothing step after application of the unsharp masking method due to excessive noise enhancement when using a rather large amplification factor.

Another disadvantage is the large amount of computational effort that is needed to perform unsharp masking taking into account the standard deviation.

## SUMMARY OF THE INVENTION

### Objects of the invention

An object of the present invention is to provide image processing methods that take into account the standard deviation and that demand less computational efforts than the prior art methods.

A further object of the present invention is to provide an amended form of adaptive histogram equalisation and contrast limited adaptive histogram equalisation and an amended form of the unsharp masking that have the above enumerated characteristics, namely that take into account the standard deviation and need less computational effort than the prior art methods.

Another object of the present invention is to provide image processing methods that take into account the standard deviation wherein an amended form of standard deviation is used which takes less computational efforts.

Other objects will become apparant from the description hereinafter.

According to the present invention there is provided an image processing method wherein a representation of an image in the form of digital pixel values x is processed to obtain resulting digital pixel values y as a function of a pixel value x, an average value m of pixel values in a window surrounding said pixel x and a standard deviation s of pixel values in such window, characterised in that said standard deviation s is obtained as

$$(S_2/(N_2.M_2) - (S_1/(N_1.M_1))^2)^{1/2}$$

wherein

(1) $S_1$ is obtained as the result of a convolution of pixel values x and a kernel of $N_1$ times $M_1$ identical elements surrounding a pixel x

(2) $S_2$ is obtained as the result of a convolution of a kernel of $N_2$ times $M_2$ identical elements surrounding a pixel x and values L(x) obtained through the use of a first look-up table comprising square values or the values of a substantially monotonically non-decreasing function approximating square values,

(3) square root values are obtained through the use of a second look-up table comprising square root values or the values of a substantially monotonically non-decreasing function approximating square root values and

(4) wherein at least one of the values $N_1.M_1$ and $N_2.M_2$ is a power of 2.

The average value m in the above method is preferably obtained as $S_1/(N_1.M_1)$ wherein $S_1$, $N_1$, and $M_1$ are as defined hereinbefore.

In a particular application this method is used in diagnostic imaging methods wherein said pixels x are digitized density or intensity values (or the logarithm of such intensity values) obtained by scanning and digitizing of a radiologic image stored on photographic film material or a photostimulable phoshor. Alternatively this method can be applied in radiologic methods wherein no intermediary storage medium is used e.g. computer tomography.

It will be clear that other applications within the field of diagnostic imaging as well as image processing applications other than those related to diagnostic imaging may be envisioned.

According to statistical theory the standard deviation (furtheron referred to as s) of a set of N values denoted by "x" is obtained as

$(\text{Sum}(x^2)/N - (\text{Sum}(x)N)^2)^{1/2}$.

Application of this method to image processing techniques demands a lot of computational effort. The present invention provides an implementation of an image processing method in which each pixel is replaced by a digital value that is obtained as a function of the original pixel value, the average value of pixel values within a window surrounding the pixel of interest and of the standard deviation of pixel values within such region.

An exact value of the standard deviation of the pixel values within such window is obtained within a reasonable amount of computation time by the following elements that are characteristic of the present invention:

- $S_2$ is obtained as the result of a convolution of the square values of the pixel values x of the image with a kernel having a number equal to $N_2.M_2$ of identical elements surrounding pixel x, said number being a power of 2,
- said square values are obtained through the use of a look-up table,
- the result of said convolution is divided by the number of pixels in said kernel namely $N_2.M_2$,
- $S_1$ is obtained as the result of a second convolution of the pixel values x of the image and a kernel having a number $N_1.M_1$ of identical elements surrounding pixel x, said number being a power of 2,
- the result of said convolution is divided by the number of pixels in said kernel, namely by $N_1.M_1$,
- the square value $(S_1/(N_1.M_1))^2$ of the result of the above-mentioned division is obtained through the use of a look-up table,
- the subtraction $S_2/(N_2.M_2) - (S_1/(N_1.M_1))^2$ is performed,
- the square root of the result of the above subtraction is obtained through the use of a look-up table.

The method of the present invention comprises two convolutions performed on the pixel values or the square pixel values with kernels at least one of which has a number of elements that is a power of 2.

By using kernels having a number of elements that is a power of 2 the divisions needed to obtain an exact value of the standard deviation are reduced to divisions by numbers that are a power of 2. Normally divisions demand a lot of computational effort. Now, the result of such divisions can be obtained through bit shifting which method demands less computational effort than methods required to perform divisions by numbers that are not power of 2.

The kernels may be square kernels so that $N_1$ is equal to $M_1$ and $N_2$ is equal to $M_2$. Preferably $N_1$, $M_1$, $N_2$ and $M_2$ are identical values. It is also possible that $N_1$ is equal to $N_2$ and $M_1$ is equal to $M_2$.

Further reduction of the computational effort is obtained by the frequent use of look-up tables.

Once the look-up tables used to obtain square values and square root values are built and stored into the memory of an image processing computer, they are available for each image processing application. The look-up table for obtaining the square root values can e.g. be construed as follows: since for example $\text{sqrt}(z . 2^{10})=\text{sqrt}(z).2^5$, the calculation of the square root of a 20 bit number can be facilitated by using a look-up table for looking up the square root by means of the 10 most significant bits. If for example the look-up table is denoted by R(z), z being a variable then R(z) is equal to $\text{sqrt}(z).2^5$; z=0...1023.

Alternatively $S_2$ can be obtained as the result of a convolution of a kernel of $N_2$ times $M_2$ identical elements and values L(x) obtained through the use of a look-up table comprising the values of a substantially monotonically non-decreasing function that is an approximation of the function $x^2$.

Also the second look-up table used to look-up the square root values may comprise a substantially monotonically non-decreasing function that is an approximation of the square root function.

Hereinbelow two specific embodiments of image processing techniques are described that employ the standard deviation.

Reduction of computational effort is obtained by application of the method of claim 1 in these image processing techniques.

A first particular application relates to the adaptive histogram equalisation image processing technique.

It has been found through research and investigation that with a certain illumination dose, giving a particular average pixel value, the average histogram calculated by means of the histograms belonging to local windows of an image (dimensions of a window being defined) can be approximated by a Gauss distribution with variable x, mean value m and standard deviation s (or standardized normal distribution with variable (x-m)/s).

As has been explained hereinbefore, adaptive histogram equalisation is performed by computing for each pixel a local histogram (in a pixels window) and a rescaled cumulative histogram. Next, the pixel of interest is mapped to its corresponding value in the rescaled cumulative histogram.

Taking into account the above research results that the average local histogram of the image areas corresponding with a given value of the average pixel value m can be approximated by a normal distribution, the cumulative histogram of which is known in the art, adaptive histogram equalisation can be performed without the need of calculating the exact histograms of the image area.

The resulting image after adaptive histogram equalisation processing taking into account the standard deviation can be formulated as follows:

$$y = A \cdot G((x - m)/s),$$

wherein y is the resulting pixel value after image processing is performed, x is an original pixel value, A represents a scale factor, G represents the standardized cumulative normal distribution, m the average value and s is the standard deviation.

As has been described hereinbefore a prejudice exists against the incorporation of the standard deviation of the pixels in a local area around a pixel of interest because of the computation effort that is needed to exert such a method.

However, by application of the method of claim 1 the computational effort required for exerting this specific form of adaptive histogram equalisation is reduced.

Preferably m is obtained as $S_1 /(N_1 \cdot M_1)$ wherein $S_1$, $N_1$, and $M_1$ are as defined hereinbefore. $N_1 \cdot M_1$ is preferably a power of 2. In an alternative embodiment any substantially monotonically non-decreasing function can be used instead of G. The scale factor A may be function of the pixel value x and/or the average value m and/or the standard deviation s.

Further decrease of the computational effort can be obtained when a (two-dimensional) look-up table is used for looking up the result of the formula $A \cdot G((x-m)/s)$, the inputs to such a look-up table are the result of a subtraction of the pixel value x and the average value m (wherein said value m is obtained as $S_1/(N_1 \cdot M_1)$ as defined hereinbefore )and the standard deviation s.

Still further decrease of the computational effort can be obtained by combining the square root look-up table and the above mentioned two dimensional look-up table.

When the standard deviation is obtained as described hereinbefore, the computational effort is reduced to 14 additions and 5 bitshifts per pixel.

Alternatively the look-up table may comprise the result of the following formula: $y = A.G((x-m)/\max(s, s_{min}))$ wherein $s_{min}$ is a predetermined minimum value. This formula provides an alternative for the contrast limited adaptive histogram equalisation technique. G represents the standardized cumulative normal distribution. Alternatively G may be replaced by any monotonically non-decreasing function.

Another particular aspect of the present invention relates to the unsharp masking image processing technique.

It was found that a very good result after image processing can be obtained by performing the following transformation on the pixel values:

$y = x + B.g((x-m)/s)$ or- what is nearly equivalent -

$y = m + B.g((x-m)/s)$ wherein y represents a resulting pixel value after image processing, x represents an original pixel value, B determines the amplification, m is an average pixel value and s is the standard deviation of the pixels in a region surrounding the pixel of interest x. The function g(z) equals G(z) - 1/2 wherein G(z) is the standardized cumulative Gaussian curve. Alternatively the function g may be replaced by any function having the characteristic that g' is greater than or equal to -1 (g' representing the derivate function).

The scale factor B determining the amplification may be function of the pixel value x and/or the average value m and/or the standard deviation s.

Commonly unsharp masking is followed by a smoothing step for the purpose of eliminating undesirable effects (such as excessive noise enhancement) resulting from said unsharp masking image processing. When performing the amended version of the unsharp masking technique according to the present invention wherein $y = x + B.g((x-m)/s)$ or $y = m + B.g((x-m)/s)$ said smoothing step may be omitted.

Reduction of computational effort can also in this technique be obtained by applying the method of claim 1.

Further decrease of the computational effort is obtained when a two-dimensional look-up table is used for looking up the result of the formula $B \cdot g((x-m)/s)$.

The inputs to such a look-up table are the result of a subtraction of the pixel value x and the average value m (wherein said value m is obtained as $S_1/(N_1 \cdot M_1)$ as defined above ) and the standard deviation s. The standard deviation is obtained as described hereinbefore.

Alternatively the two-dimensional look-up table may comprise the result of the following formula: $B \cdot g((x-m)/\max(s, s_{min}))$ wherein $s_{min}$ is a predetermined minimum value.

As has already been explained hereinbefore, still further decrease of the computational effort can be obtained by combining the used look-up tables.

## Claims

1. An image processing method wherein a representation of an image in the form of digital pixel values x is processed to obtain resulting digital pixel values y as a function of a pixel value x, an average value m of pixel values in a window surrounding said pixel x and a standard deviation s of pixel values in such window, characterised in that said standard deviation s is obtained as $(S_2/(N_2 \cdot M_2) - (S_1/(N_1 \cdot M_1))^2)^{1/2}$ wherein

   (1) $S_1$ is obtained as the result of a convolution of pixel values x and a kernel of $N_1$ times $M_1$ identical elements surrounding a pixel x

   (2) $S_2$ is obtained as the result of a convolution of a kernel of $N_2$ times $M_2$ identical elements surrounding a pixel x and values L(x) obtained through the use of a first look-up table comprising square values or the values of a substantially monotonically non-decreasing function approximating square values,

(3) square root values are obtained through the use of a second look-up table comprising square root values or the values of a substantially monotonically non-decreasing function approximating square root values and

(4) wherein at least one of the values $N_1.M_1$ and $N_2.M_2$ is a power of 2.

2. An image processing method according to claim 1 wherein said pixels y are obtained as $A.G((x-m)/max(s, s_{min}))$ wherein A is a scale factor, G represents a substantially monotonically non-decreasing function and $s_{min}$ is a predetermined minimum value.

3. An image processing method according to claim 2 wherein $s_{min}$ is 0 so that said resulting pixels y are obtained as $A . G((x-m)/s)$ wherein A is a scale factor, and G represents a substantially monotonically non-decreasing function.

4. A method according to claim 2 or 3 wherein G represents the standardized cumulative normal distribution.

5. An image processing method according to claims 3 or 4 wherein A is a function of x and/or m and/or s.

6. A method according to any of claims 2 to 5 wherein the result of $A.G((x-m)/max(s, s_{min}))$ is obtained through the use of a look-up table.

7. An image processing method according to claim 1 wherein said pixels y are obtained as $x + B . g((x-m)/max(s, s_{min}))$ or as $m + B . g((x-m)/max(s, s_{min}))$ wherein B determines the amplification, $s_{min}$ is a predetermined minimum value and $g(z)$ represents a function having a derivate that is equal to or larger than -1.

8. An image processing method according to claim 7 wherein $s_{min}$ is 0 so that said resulting pixels y are obtained as $x + B . g((x-m)/s)$ or as $m + B . g((x-m)/s)$ wherein B determines the amplification and $g(z)$ represents a function having a derivate that is equal to or larger than -1.

9. A method according to claim 7 or 8 wherein $g(z)$ is a function equal to $G(z) - 1/2$ wherein G is the standardized cumulative normal distribution.

10. A method according to any of claims 7 to 9 wherein B is a function of x and/or m and/or s.

11. A method according to any of claims 7 to 10 wherein the result of $B .g((x-m)/max(s, s_{min}))$ is obtained through the use of a two-dimensional look-up table.

12. A method according to any of the preceding claims wherein said average value m is obtained as $S_1 /N_1.M_1$ wherein $S_1$ is the result of a convolution of pixel values x with a kernel of $N_1$ times $M_1$ identical elements surrounding a pixel value x .

**Patentansprüche**

1. Ein Bildverarbeitungsverfahren, nach dem eine Darstellung eines Bildes in der Form von digitalen Pixelwerten verarbeitet wird zum Erhalt von daraus erfolgenden digitalen Pixelwerten y als Funktion eines Pixelwertes x, eines Durchschnittswertes m von Pixelwerten in einem dieses x-Pixel umgebenden Fenster und einer Standardabweichung s von Pixelwerten in einem solchen Fenster, dadurch gekennzeichnet, daß die Standardabweichung s als $(S_2/(N_2.M_2) - S_1/(N_1.M_1))^2)^{1/2}$ ermittelt wird, wobei

(1) $S_1$ ermittelt wird als Resultat einer Faltung von Pixelwerten x und eines Kernes von $N_1$ mal $M_1$ identischen Elementen, die ein x-Pixel umgeben,

(2) $S_2$ ermittelt wird als Resultat einer Faltung eines Kernes von $N_2$ mal $M_2$ identischen Elementen, die ein x-Pixel umgeben, und von L(x)-Werten, ermittelt durch die Verwendung einer ersten Nachschlagtabelle, welche Quadrate oder die Werte einer wesentlich monoton nicht-abnehmender Funktion, die sich Quadraten annähert, enthält,

(3) Quadratwurzeln ermittelt werden durch die Verwendung einer zweiten Nachschlagtabelle, welche Quadratwurzeln oder Werte einer wesentlich monoton nicht-abnehmender Funktion, die sich Quadratwurzeln annähert, enthält, und

(4) mindestens einer der Werte $N_1.M_1$ und $N_2.M_2$ eine Potenz von 2 ist.

2. Ein Bildverarbeitungsverfahren nach Anspruch 1, dadurch gekennzeichnet, daß die y-Pixel als $A.G((x-m)/max(s, s_{min}))$ ermittelt werden, wobei A ein Normierungsfaktor ist, G eine wesentlich monoton nicht-abnehmende Funktion bedeutet und $s_{min}$ ein vorbestimmter Mindestwert ist.

3. Ein Bildverarbeitungsverfahren nach Anspruch 2, dadurch gekennzeichnet, daß $s_{min}$ 0 ist, so daß die resultierenden y-Pixel als $A.G((x-m)/s)$ ermittelt werden, wobei A ein Normierungsfaktor ist und G eine wesentlich monoton nichtabnehmende Funktion bedeutet.

4. Ein Bildverarbeitungsverfahren nach Anspruch 2 oder 3, dadurch gekennzeichnet, daß G die normierte Gaußsche Summenverteilung bedeutet.

5. Ein Bildverarbeitungsverfahren nach Anspruch 3 oder 4, dadurch gekennzeichnet, daß A eine Funktion von x und/oder m und/oder s ist.

6. Ein Bildverarbeitungsverfahren nach irgendeinem der Ansprüche 2-5, dadurch gekennzeichnet, daß das Resultat von $A.G((x-m)/\max(s, s_{min}))$ durch die Verwendung einer Nachschlagtabelle ermittelt wird.

7. Ein Bildverarbeitungsverfahren nach Anspruch 1, dadurch gekennzeichnet, daß die y-Pixel als $x + B.g((x-m)/\max(s, s_{min}))$ oder als $m + B.g((x-m)/\max(s, s_{min}))$ ermittelt werden, wobei B die Verstärkung bestimmt, $s_{min}$ ein vorbestimmter Mindestwert ist und $g(z)$ eine Funktion bedeutet mit einer Ableitung, die gleich oder größer als -1 ist.

8. Ein Bildverarbeitungsverfahren nach Anspruch 7, dadurch gekennzeichnet, daß $s_{min}$ 0 ist, so daß die resultierenden Pixel als $x + B.g((x-m)/s)$ oder als $m + B.g((x-m)/s)$ ermittelt werden, wobei B die Verstärkung bestimmt und $g(z)$ eine Funktion bedeutet mit einer Ableitung, die gleich oder größer als -1 ist.

9. Ein Bildverarbeitungsverfahren nach Anspruch 7 oder 8, dadurch gekennzeichnet, daß $g(z)$ eine Funktion gleich $G(z) - 1/2$ ist, wobei G die normierte Gaußsche Summenverteilung bedeutet.

10. Ein Bildverarbeitungsverfahren nach irgendeinem der Ansprüche 7-9, dadurch gekennzeichnet, daß B eine Funktion von x und/oder m und/oder s ist.

11. Ein Bildverarbeitungsverfahren nach irgendeinem der Ansprüche 7-10, dadurch gekennzeichnet, daß das Resultat von $B.g((x-m)/\max(s, s_{min}))$ durch die Verwendung einer Zweiweg-Nachschlagtabelle ermittelt wird.

12. Ein Bildverarbeitungsverfahren nach irgendeinem der vorhergehenden Ansprüche, dadurch gekennzeichnet, daß der Durschnittswert m als $S_1/N_1.M_1$ ermittelt wird, wobei $S_1$ das Resultat ist einer Faltung von Pixelwerten x und eines Kernes von $N_1$ mal $M_1$ identischen Elementen, die einen Pixelwert x umgeben.

## Revendications

1. Une méthode de traitement d'images, suivant laquelle une représentation d'une image sous forme de valeurs de pixel digitales x est traitée pour obtenir des valeurs de pixel digitales y résultantes en fonction d'une valeur de pixel x, d'une valeur moyenne m de valeurs de pixel dans une fenêtre entourant ce pixel x et d'un écart type s de valeurs de pixel dans une telle fenêtre, caractérisée en ce que l'écart type s est obtenu comme $(S_2/(N_2.M_2) - (S_1/N_1.M_1))^2)^{1/2}$, où

   (1) $S_1$ est obtenu comme résultat d'une convolution de valeurs de pixel x et d'un noyau de $N_1$ fois $M_1$ éléments identiques entourant un pixel x,

   (2) $S_2$ est obtenu comme résultat d'une convolution d'un noyau de $N_2$ fois $M_2$ éléments identiques entourant un pixel x et des valeurs $L(x)$ obtenues par l'usage d'une première table de références comportant des valeurs de carrés ou les valeurs d'une fonction non décroissante de façon substantiellement monotone s'approchant de valeurs de carrés,

   (3) des valeurs de racine carrée sont obtenus par l'utilisation d'une seconde table de références comprenant des valeurs de racine carrée ou les valeurs d'une fonction non décroissante de façon substantiellement monotone s'approchant de valeurs de racines carrées, et

   (4) au moins une des valeurs $N_1.M_1$ et $N_2.M_2$ est une puissance de 2.

2. Une méthode de traitement d'images selon la revendication 1, caractérisée en ce que les pixels y sont obtenus comme $A.G((x-m)/\max(s, s_{min}))$, où A est une échelle, G représente une fonction non décroissante de façon substantiellement monotone et $s_{min}$ est une valeur minimum prédéterminée.

3. Une méthode de traitement d'images selon la revendication 2, caractérisée en ce que $s_{min}$ est 0 de sorte que ces pixels y qui en résultent sont obtenus comme $A.G((x-m)/s)$, où A est une échelle et G représente une fonction non décroissante de façon substantiellement monotone.

4. Une méthode de traitement d'images selon la revendication 2 ou 3, caractérisée en ce que G représente la répartition de Laplace-Gauß cumulée normalisée.

5. Une méthode de traitement d'images selon la revendication 3 ou 4, caractérisée en ce que A est une fonction de x et/ou de m et/ou de s.

6. Une méthode de traitement d'images selon l'une quelconque des revendications 2 à 5, caractérisée en ce que le résultat de $A.G((x-m)/\max(s, s_{min}))$ est obtenu en utilisant une table de référence.

7. Une méthode de traitement d'images selon la revendication 1, caractérisée en ce que les pixels y sont obtenus comme $x + B.g((x-m)/\max(s, s_{min}))$ ou comme $m + B.g((x-m)/\max(s, s_{min}))$, où B détermine l'amplification, $s_{min}$ est une valeur minimum prédéterminée et $g(z)$ représente une fonction ayant une dérivée qui est égale à ou plus grande que -1.

8. Une méthode de traitement d'images selon la revendication 7, caractérisée en ce que $s_{min}$ est 0 de sorte que ces pixels y qui en résultent sont obtenus comme $x + B.g((xm)/s)$ ou comme $m + B.g((x-m)/s)$, où B détermine l'amplification et $g(z)$ représente une fonction ayant une dérivée qui est égale à ou plus grande que -1.

9. Une méthode de traitement d'images selon la revendication 7 ou 8, caractérisée en ce que $g(z)$ est une fonction égale à $G(z) - 1/2$, où G représente la répartition de Laplace-Gauß cumulée normalisée.

10. Une méthode de traitement d'images selon l'une quelconque des revendications 7 à 9, caractérisée en ce que B est une fonction de x et/ou de m et/ou de s.

11. Une méthode de traitement d'images selon l'une quelconque des revendications 7 à 10, caractérisée en ce que le résultat de $B.g((x-m)/\max(s, s_{min}))$ est obtenu en utilisant une table de référence à double entrée.

12. Une méthode de traitement d'images selon l'une quelconque des revendications précédentes, caractérisée en ce que la valeur moyenne m est obtenue comme $S_1/N_1.M_1$, où $S_1$ est le résultat d'une convolution de valeurs de pixel x avec un noyau de $N_1$ fois $M_1$ éléments identiques entourant une valeur de pixel x.